# EUROPEAN PATENT APPLICATION

(11) **EP 4 768 308 A1**
(43) Date of publication of application: **01.07.2026**
(21) Application number: 25226197.9
(22) Date of filing: 22.12.2025
(51) Int. Cl.: B60L 3/10, B60L 3/12, B60L 15/20

(54) **VEHICLE SLIPPAGE CONTROL METHOD, VEHICLE, AND STORAGE MEDIUM**

(30) Priority: 24.12.2024 CN 202411917318
(71) Applicant: Hycet Transmission System (Jiangsu) Co., Ltd., Zhenjiang, Jiangsu 212200 (CN)
(72) Inventor: LIU, Xinqiang, Zhenjiang, 212200 (CN); LIU, Fang, Zhenjiang, 212200 (CN); ZHAO, Yonghao, Zhenjiang, 212200 (CN)
(74) Representative: Murgitroyd & Company

(57) **Abstract**

The present disclosure provides a vehicle slippage control method, a vehicle, and a storage medium. The method includes: acquiring a current wheel speed and a current reference vehicle speed of a vehicle; determining, based on a first difference between the current wheel speed and the current reference vehicle speed, a first torque reduction gradient, reducing, based on the first torque reduction gradient, an output torque of a drive motor to a first target intervention torque, and determining whether the current wheel speed has a downward trend; and determining, based on a current motor requested torque, a wheel speed after deceleration and a reference vehicle speed after deceleration, a target gradient when the current wheel speed has the downward trend, and adjusting, based on the target gradient, the output torque of the drive motor. This method enables integration of a control algorithm within a motor control unit.

## Description

### TECHNICAL FIELD

The present application relates to the field of vehicle technologies, and in particular, to a vehicle slippage control method, a vehicle, and a storage medium in the field of vehicle technologies.

### BACKGROUND

In new energy vehicles, a traction control system is one of key technologies ensuring driving safety and performance. Its main function is to prevent excessive wheel spin by regulating an output torque of a drive motor when wheel slippage occurs, thereby maintaining vehicle stability and controllability.

In conventional technologies, when the wheel slippage occurs, a system of Electronic Stability Control (ESC) may send an intervention request and an intervention torque to a Hybrid Control Unit (HCU). Then, based on the intervention request, the HCU is configured to send the intervention torque to a Motor Control Unit (MCU) via Controller Area Network (CAN) bus. The MCU is configured to execute torque reduction to mitigate wheel slippage.

However, in the above method, since the intervention torque requires multi-level signal transmission and the ESC has a relatively large window for identifying wheel slippage, significant communication delays occur. Coupled with the rapid response of the MCU, this may lead to premature wheel slippage. As a result, power at the wheel end decreases substantially, potentially even causing a loss of control. This issue urgently requires a solution.

### SUMMARY

The present disclosure provides a vehicle slippage control method, a vehicle, and a storage medium. This method enables integration of a control algorithm within a motor control unit to monitor a wheel slip status in real time and may perform torque intervention in advance, thereby dynamically adjusting an output torque of a drive motor to reduce recurrence of wheel slippage, thus maintaining stable power output of the vehicle.

In a first aspect, the present disclosure provides a vehicle slippage control method, including: acquiring a current wheel speed and a current reference vehicle speed of a vehicle; determining, based on a first difference between the current wheel speed and the current reference vehicle speed, a first torque reduction gradient when slippage is determined to occur based on the current wheel speed and the current reference vehicle speed, reducing, based on the first torque reduction gradient, an output torque of a drive motor to a first target intervention torque, and determining whether the current wheel speed has a downward trend; and determining, based on a current motor requested torque, a wheel speed after deceleration and a reference vehicle speed after deceleration, a target gradient when the current wheel speed has the downward trend, and adjusting, based on the target gradient, the output torque of the drive motor until the vehicle meets a condition for exiting slippage control.

The above technical solution integrates a control algorithm into a motor control unit to monitor wheel slippage status in real time and may perform torque intervention in advance, thereby dynamically adjusting an output torque of a drive motor to reduce occurrence of wheel slippage again and ensuring a stable output of vehicle driving force.

According to the first aspect, in some possible implementation methods, after the the current wheel speed and the current reference speed of the vehicle, the method further includes: determining whether the first difference between the current wheel speed and the current reference vehicle speed is greater than a first speed difference threshold; and determining occurrence of slippage when the first difference between the current wheel speed and the current reference vehicle speed is greater than the first speed difference threshold.

Through the above technical solution, by comparing the difference between the current wheel speed and the current reference speed with the first speed difference threshold, it is determined whether slippage of the vehicle occurs, thereby improving slippage control.

According to the first aspect and the above-mentioned implementation methods, in some possible implementation methods, the first speed difference threshold is acquired by looking up, based on a difference between a current left wheel speed and a current right wheel speed of the vehicle, a table.

Through the above technical solution, the first speed difference threshold is defined.

According to the first aspect and the above-mentioned implementation methods, in some possible implementation methods, the determining, based on the current motor requested torque, the wheel speed after deceleration and the reference vehicle speed after deceleration, the target gradient, and adjusting, based on the target gradient, the output torque of the drive motor, includes: determining whether a second difference between the wheel speed after deceleration and the reference vehicle speed after deceleration is greater than a second speed difference threshold; and determining, based on the second difference, the target gradient, and reducing, based on the target gradient, the output torque of the drive motor to the first target intervention torque when the second difference between the wheel speed after deceleration and the reference vehicle speed after deceleration is greater than the second speed difference threshold.

Through the above technical solution, when the current wheel speed has a downward trend, the method further determines the difference between the wheel speed after deceleration and the reference vehicle speed after deceleration and the target gradient corresponding to the difference, so that the output torque of the motor may be reduced or increased based on different target gradients, thereby improving accuracy of slippage control.

According to the first aspect and the above-mentioned implementation methods, in some possible implementation methods, after the determining whether the second difference between the wheel speed after deceleration and the reference vehicle speed after deceleration is greater than the second speed difference threshold, the method further includes: determining, based on the current motor requested torque, the target gradient, and restoring, based on the target gradient, the output torque of the drive motor to a second target intervention torque when the the second difference between the wheel speed after deceleration and the reference vehicle speed after deceleration is less than or equal to the second speed difference threshold.

Through the above technical solution, when the current wheel speed has a downward trend and the second difference between the wheel speed after deceleration and the reference vehicle speed after deceleration is less than or equal to the second speed difference threshold, a torque increase operation may be further performed. The driving force will be gradually restored to avoid power loss caused by excessive intervention while ensuring safety.

According to the first aspect and the above-mentioned implementation methods, in some possible implementation methods, after the restoring, based on the target gradient, the output torque of the drive motor to the second target intervention torque, the method further includes: calculating a third difference between the wheel speed after deceleration and the reference vehicle speed after deceleration; determining whether the third difference between the wheel speed after deceleration and the reference vehicle speed after deceleration is less than or equal to a third speed difference threshold; acquiring a current left wheel speed and a current right wheel speed of the vehicle when the third difference is less than or equal to the third speed difference threshold, and determining whether a difference between the current left wheel speed and the current right wheel speed is less than or equal to the first speed difference threshold; determining, based on the current motor requested torque and the difference between the current left wheel speed and the current right wheel speed, the target gradient according to a first gradient table when the difference between the current left wheel speed and the current right wheel speed is less than or equal to the first speed difference threshold, or determining, based on the current motor requested torque and the difference between the current left wheel speed and the current right wheel speed, the target gradient according to a second gradient table when the difference between the current left wheel speed and the current right wheel speed is greater than the first speed difference threshold; and restoring, based on the target gradient, the output torque of the drive motor to a third target intervention torque.

Through the above technical solution, when the current wheel speed is in a downward trend, and the third difference between the wheel speed after deceleration and the reference vehicle speed after deceleration is less than or equal to the third speed difference threshold, it is indicated that the vehicle slippage has been controlled. Therefore, to meet a demand of a driver, a corresponding torque reduction gradient is acquired from the current motor requested torque and the left-right wheel-speed difference, so that the torque of the drive motor is restored to a driver requested torque.

According to the first aspect and the above-mentioned implementation methods, in some possible implementation methods, after the determining whether the third difference between the wheel speed after deceleration and the reference vehicle speed after deceleration is greater than the second speed difference threshold, the method further includes: determining whether the difference between the current left wheel speed and the current right wheel speed is less than or equal to the first speed difference threshold when the third difference is greater than the third speed difference threshold; determining, based on the third difference, the target gradient according to a third gradient table when the difference between the current left wheel speed and the current right wheel speed is less than or equal to the first speed difference threshold; or determining, based on the third difference, the target gradient according to a fourth gradient table when the difference between the current left wheel speed and the current right wheel speed is greater than the first speed difference threshold; and reducing, based on the target gradient, the output torque of the drive motor to the first target intervention torque.

Through the above technical solution, when the current wheel speed is in a downward trend, and the third difference between the wheel speed after deceleration and the reference vehicle speed after deceleration is less than or equal to the third speed difference threshold, it is indicated that the slippage occurred again. Intervention needs to be performed based on the first target intervention torque to prevent potential safety hazards.

According to the first aspect and the above-mentioned implementation methods, in some possible implementation methods, the current wheel speed is a single axle wheel speed of the vehicle, and the current reference vehicle speed is an actual traveling speed of the vehicle.

In a second aspect, the present disclosure provides a vehicle including a memory and a processor, where executable program codes are stored in the memory and the processor is configured to call and execute the executable program codes to execute the vehicle slippage control method of the above-mentioned embodiments.

In a third aspect, the present disclosure provides a computer-readable storage medium storing computer program codes. When the computer program codes are executed on a computer, the computer is configured to execute the method above-mentioned in the first aspect or any possible implementation method of the first aspect.

### BRIEF DESCRIPTION OF THE DRAWINGS

FIG. 1 is a flowchart of a vehicle slippage control method according to the embodiments of the present disclosure.
FIG. 2 is a schematic diagram of a main execution process of vehicle slippage control according to the embodiments of the present disclosure.
FIG. 3 is a schematic block diagram of a vehicle slippage control device according to the embodiments of the present disclosure.
FIG. 4 is a schematic structural diagram of a vehicle according to the embodiments of the present disclosure.

### DETAILED DESCRIPTION OF THE EMBODIMENTS

A clear and detailed description of technical solutions of the present disclosure will be given below, with reference to accompanying drawings. In the description of the embodiments of the present disclosure, unless otherwise specified, the symbol "/" represents the meaning of "or", for example, A/B can represent A or B. The "and/or" in the text is merely a way to describe the relationship between associated objects, indicating that there may be three types of relationships. For example, "A and/or B" may mean A alone, both A and B, or B alone. Furthermore, in the description of the embodiments of the present disclosure, "a plurality of" refers to two or more than two.

Hereinafter, terms "first" and "second" are merely used for descriptive purposes and should not be construed as implying or suggesting relative importance or implicitly indicating the quantity of the indicated technical features. Therefore, when a feature is characterized as "first" or "second", it may be explicitly or implicitly understood to include one or more of such features.

With growing global emphasis on environmental protection and sustainable development, new energy vehicles (NEVs) have become a major trend in the automotive industry. In new energy vehicles, traction control system is one of key technologies ensuring driving safety and performance. Its main function is to prevent excessive wheel spin by regulating an output torque of a drive motor when wheel slippage occurs, thereby maintaining vehicle stability and controllability. Especially on surfaces with low adhesion, such as slippery or snow-covered roads, effective traction control may significantly enhance driving safety and comfort.

When wheel slippage occurs during driving, in conventional technologies, abnormal conditions are mainly detected by Electronic Stability Control (ESC), and the ESC may send an intervention request and an intervention torque to a Hybrid Control Unit (HCU) via Controller Area Network (CAN) bus. Then, based on the intervention request, the HCU is configured to send the intervention torque to a Motor Control Unit (MCU) via the CAN bus. The MCU is configured to execute torque adjustment to mitigate wheel slippage. However, this method has the following problems. Transmission time of torque intervention is long, since the intervention torque requires multi-level signal transmission from the ESC to the HCU and finally to the MCU to execute the intervention torque, the subsequent response of the MCU to the intervention torque introduces significant communication delays in the signal transmission process. As a result, the system cannot react to wheel slippage in a timely manner. The ESC has a relatively large window for identifying wheel slippage, meaning the intervention mechanism is only triggered after a pronounced slippage has already begun. This delayed identification often causes the MCU to respond too abruptly, leading to premature wheel slippage. Consequently, this results in a substantial loss of power at the wheel end and may even lead to a loss of vehicle control. Therefore, to address the aforementioned issues, there is a need to develop an independent algorithm for monitoring wheel slippage status and controlling intervention torque. This algorithm should be directly integrated into the MCU, enabling it to identify wheel slippage earlier than the ESC. This allows for direct intervention by the MCU to execute precise torque reduction, thereby effectively minimizing wheel slippage and enhancing driving safety and stability under complex road conditions.

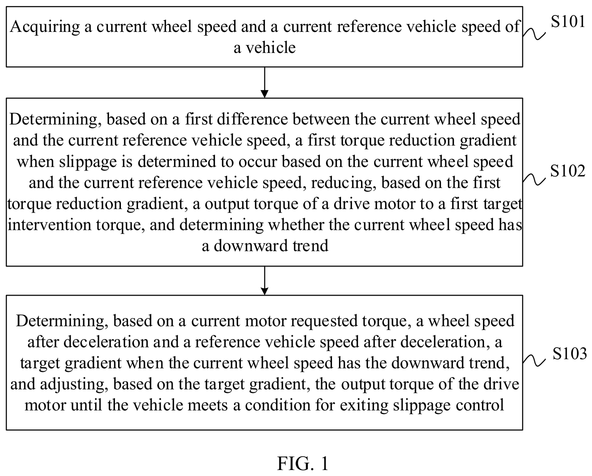

FIG. 1 is a schematic flowchart of a vehicle slippage control method according to the embodiments of the present disclosure.

Exemplarily, as shown in FIG. 1, the method includes the following steps.

Step S101: acquiring a current wheel speed and a current reference vehicle speed of a vehicle.

Specifically, when a vehicle is driving in complex road conditions, such as slippery or snow-covered roads, wheels are prone to slipping due to insufficient friction, thereby increasing the safety risks for the vehicle. Therefore, when the vehicle is driving in complex road conditions, effective control of vehicle slippage is needed when driving in complex road conditions to reduce the risk of accidents.

Specifically, firstly, the current wheel speed and the current reference vehicle speed of the vehicle need to be acquired. The current wheel speed of the vehicle is a single axle wheel speed, i.e., a front-axle wheel speed or a rear-axle wheel speed. The current reference vehicle speed is an actual traveling speed of the vehicle. For a two-wheel drive vehicle, the current reference vehicle speed may be taken as a wheel speed of non-driven wheels. For four-wheel drive vehicles, the current reference vehicle speed may be derived by means of a maximum wheel speed method, a delta speed method, a calculation method based on brake wheel cylinder pressure, a Kalman-filter method, a recursive method, or a vehicle dynamics method. Secondly, the ESC is configured to generate a target gradient based on the real-time monitored current wheel speed, the current reference vehicle speed, and variation in torque request of the motor. And then, the ESC is configured to dynamically adjust, based on the target gradient, the output torque of the drive motor, thereby ensuring optimal vehicle performance under road adhesion conditions, reducing wheel slippage, and maintaining wheel driving force at the wheels.

Step S102: determining, based on a first difference between the current wheel speed and the current reference vehicle speed, a first torque reduction gradient when slippage is determined to occur based on the current wheel speed and the current reference vehicle speed, reducing, based on the first torque reduction gradient, an output torque of a drive motor to a first target intervention torque, and determining whether the current wheel speed has a downward trend.

Optionally, in one embodiment of the present disclosure, after acquiring the current wheel speed and the current reference speed of the vehicle, the method further includes: determining whether the first difference between the current wheel speed and the current reference vehicle speed is greater than a first speed difference threshold; and determining occurrence of slippage when the first difference between the current wheel speed and the current reference vehicle speed is greater than the first speed difference threshold.

The first target intervention torque may be set by a person skilled in the art according to practical requirements under test or may be acquired through a limited number of simulation calculations. This parameter is not specifically limited herein.

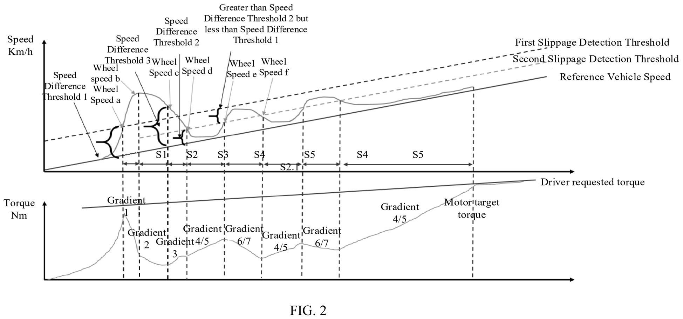

Specifically, as shown in FIG. 2, after acquiring the current wheel speed and the current reference vehicle speed of the vehicle, firstly, a wheel slippage detection threshold is set to a first slippage detection threshold and the first difference between the current wheel speed and the current reference speed is calculated. When the first difference between the current wheel speed and the current reference speed is greater than the first speed difference threshold (i.e., a speed difference threshold 1), this indicates that the vehicle is slipping. For example, the first speed difference threshold may be set at 10 km/h. That is, when the first difference between the current wheel speed and the current reference speed is greater than 10 km/h, this indicates that the vehicle is slipping (as shown in S1 in FIG. 2: Wheel Speed a - b). Correspondingly, torque intervention is required in advance to reduce a rotational speed of the wheels to prevent excessive wheel slipping. Thus, when there is wheel slippage, the slippage torque intervention flag needs to be activated first. Since torque reduction corresponding to a wheel speed at a peak point (i.e., Wheel Speed b) is the largest, the first target intervention torque may be set at this moment. Then, the first torque reduction gradient (i.e., Gradient 1) is determined based on the first difference between the current wheel speed and the current reference vehicle speed. Based on the first torque reduction gradient, the output torque of the drive motor is reduced to the first target intervention torque (i.e., Torque Threshold 1). For example, the first target intervention torque may be set to 0 Nm, indicating that a target value for the slip intervention torque is 0 Nm. At this point, the drive motor will rapidly reduce its output torque according to the first torque reduction gradient. As the motor torque decreases, its slip tendency will be reduced rapidly and the current wheel speed will begin to show a declining trend, enabling the wheel to quickly regain traction. This ensures smooth vehicle operation and prevents a sudden loss of drive force. Subsequently, during the process of gradually reducing the output torque of the drive motor to the first target intervention torque based on the first torque reduction gradient, it is necessary to further detect whether the current wheel speed exhibits a downward trend. Based on a detection result of the current wheel speed, different target gradients are generated to correspondingly adjust the output torque of the drive motor.

The first slippage detection threshold is matched and calibrated based on actual vehicle debugging results. The first target intervention torque may be matched and calibrated by comprehensively considering factors such as wheel slippage amount, drivability, and power performance. The first speed difference threshold may be acquired by looking up, based on a wheel speed difference between the left and right wheels of the vehicle, a table. Different wheel speed differences correspond to different first speed difference thresholds. Meanwhile, since the first torque reduction gradient is related to the first difference between the current wheel speed and the current reference vehicle speed, the larger the first difference is, the greater the corresponding first torque reduction gradient which is required may be, indicating that the output torque of the drive motor reduces more rapidly.

Step S103: determining, based on a current motor requested torque, a wheel speed after deceleration and a reference vehicle speed after deceleration, a target gradient when the current wheel speed has the downward trend, and adjusting, based on the target gradient, the output torque of the drive motor until the vehicle meets a condition for exiting slippage control.

Optionally, in one embodiment of the present disclosure, the determining, based on the current motor requested torque, the wheel speed after deceleration and the reference vehicle speed after deceleration, a target gradient includes: determining whether a second difference between the wheel speed after deceleration and the reference vehicle speed after deceleration is greater than a second speed difference threshold; and determining, based on the second difference, the target gradient, and reducing, based on the target gradient, the output torque of the drive motor to the first target intervention torque when the second difference between the wheel speed after deceleration and the reference vehicle speed after deceleration is greater than the second speed difference threshold.

Optionally, in one embodiment of the present disclosure, after determining whether the second difference between the wheel speed after deceleration and the reference vehicle speed after deceleration is greater than the second speed difference threshold, the method further includes: determining, based on the current motor requested torque, the target gradient, and restoring, based on the target gradient, the output torque of the drive motor to a second target intervention torque when the the second difference between the wheel speed after deceleration and the reference vehicle speed after deceleration is less than or equal to the second speed difference threshold.

Specifically, as shown in FIG. 2, in this embodiment of the present disclosure, if a downward trend in the current wheel speed is detected, it indicates that the friction between the wheel and the road surface is gradually increasing, the wheel has begun to regain traction, and the slippage has been initially controlled. However, potential slippage risks may still exist. Therefore, it is necessary to further determine the target gradient based on the wheel speed after deceleration and the reference vehicle speed after deceleration. A plurality of target gradients are set, corresponding respectively to wheel speed segments shown in FIG. 2. That is, a corresponding target gradient may be determined based on the difference between the wheel speed after deceleration and the reference vehicle speed after deceleration. The output torque of the drive motor is then adjusted based on the target gradient until the vehicle meets the conditions for exiting the slippage control.

Specifically, first, when the current wheel speed has a downward trend, the wheel slippage detection threshold is switched to a second slippage detection threshold, and it is determined whether a second difference between the wheel speed after deceleration and the reference vehicle speed after deceleration is greater than the second speed difference threshold (i.e., Speed Difference Threshold 3). For example, if the second speed difference threshold is 12 km/h and the second difference between the wheel speed after deceleration and the reference vehicle speed after deceleration is greater than the second speed difference threshold, it indicates that the vehicle is still experiencing wheel slippage (as shown in S2 in FIG. 2: Wheel Speed b - c). In this case, a slight torque reduction may be performed. Meanwhile, a corresponding target gradient is determined based on the second difference. That is, the target gradient here is Gradient 2. Thereby, based on the Gradient 2, the output torque of the drive motor is further reduced to the first target intervention torque. The second speed difference threshold is determined based on the second difference between the wheel speed after deceleration and the reference vehicle speed after deceleration. The larger the second difference is, the greater the Gradient 2, which is output correspondingly, may be, indicating that the torque of the drive motor is reduced more rapidly. That is, when the second difference between the wheel speed after deceleration and the reference vehicle speed after deceleration is greater than 12 km/h, the Gradient 2 is output correspondingly. Consequently, the output torque of the drive motor is further reduced to 0 Nm based on the Gradient 2.

Furthermore, when the second difference between the wheel speed after deceleration and the reference vehicle speed after deceleration is less than or equal to the second speed difference threshold, that is, when the second difference is less than or equal to 12 km/h, it indicates that the wheel has further regained traction (as shown in S3 of FIG. 2: Wheel Speed c - Wheel Speed d). If a strong torque reduction is continued to be executed (i.e., execution of the first target intervention torque) when traction has already been gradually restored, unnecessary power loss may be caused, thereby adversely affecting driving performance and driving experience of the vehicle. Therefore, the torque intervention strategy may be appropriately adjusted by beginning to increase torque to prevent the current reference vehicle speed from dropping too much. That is, the second target intervention torque (i.e., Torque Threshold 2) may be set. For example, the second target intervention torque may be set to 100 Nm. Meanwhile, the target gradient corresponding to this phase (that is, Gradient 3) is determined based on the current motor requested torque. Therefore, the output torque of the drive motor is further restored to the second target intervention torque based on the gradient 3. This enables more precise monitoring of the wheel status to prevent wheel slippage again and achieves a better balance in terms of safety. The second speed difference threshold is determined based on the second difference between the wheel speed after deceleration and the reference vehicle speed after deceleration. The larger the second difference is, the greater the corresponding output gradient 3 may be, indicating that the torque of the drive motor increases more rapidly. In other words, when the wheel speed after deceleration and the reference vehicle speed after deceleration is less than or equal to 12 km/h, the output torque of the drive motor is restored to 100 Nm based on the Gradient 3.

Optionally, in one embodiment of the present disclosure, after the restoring, based on the target gradient, the output torque of the drive motor to a second target intervention torque, the method further includes: calculating a third difference between the wheel speed after deceleration and the reference vehicle speed after deceleration; determining whether the third difference between the wheel speed after deceleration and the reference vehicle speed after deceleration is less than or equal to a third speed difference threshold; acquiring a current left wheel speed and a current right wheel speed of the vehicle when the third difference is less than or equal to the third speed difference threshold, and determining whether a difference between the current left wheel speed and the current right wheel speed is less than or equal to the first speed difference threshold; determining, based on the current motor requested torque and the difference between the current left wheel speed and the current right wheel speed, the target gradient according to a first gradient table when the difference between the current left wheel speed and the current right wheel speed is less than or equal to the first speed difference threshold; or determining, based on the current motor requested torque and the difference between the current left wheel speed and the current right wheel speed, the target gradient according to a second gradient table when the difference between the current left wheel speed and the current right wheel speed is greater than the first speed difference threshold; and restoring, based on the target gradient, the output torque of the drive motor to a third target intervention torque.

Optionally, in one embodiment of the present disclosure, after the determining whether the third difference between the wheel speed after deceleration and the reference vehicle speed after deceleration is less than or equal to the third speed difference threshold, the method further includes: determining whether the difference between the current left wheel speed and the current right wheel speed is less than or equal to the first speed difference threshold when the third difference is greater than the third speed difference threshold; determining, based on the third difference, the target gradient according to a third gradient table when the difference between the current left wheel speed and the current right wheel speed is less than or equal to the first speed difference threshold, or determining, based on the third difference, the target gradient according to a fourth gradient table when the difference between the current left wheel speed and the current right wheel speed is greater than the first speed difference threshold; and reducing, based on the target gradient, the output torque of the drive motor to the first target intervention torque.

Specifically, during the reduction of the output torque of the drive motor, the third difference between the wheel speed after deceleration and the reference vehicle speed after deceleration is calculated continuously (as shown in S4 of FIG. 2: Wheel Speed d - e). When the third difference is less than or equal to the third speed difference threshold (i.e., Speed Difference Threshold 2), for example, the third speed difference threshold may be set as 6 km/h, and the difference between the current left wheel speed and the current right wheel speed is less than or equal to the first speed difference threshold, it indicates that the left and right wheel speeds are the same. The target gradient corresponding to this phase (that is, Gradient 4) is determined based on the current motor requested torque and the difference between the current left wheel speed and the current right wheel speed according to the first gradient table. Correspondingly, based on the target gradient, the output torque of the drive motor is restored to the third target intervention torque (i.e., Torque Threshold 3), and the third target intervention torque is the driver requested torque. In other words, when the third difference is less than or equal to 6 km/h and the difference between the current left wheel speed and the current right wheel speed is less than or equal to 10 km/h, the output torque of the drive motor may be adjusted based on the Gradient 4 to a requested output torque on the drive motor by the vehicle controller. That is, the torque output is restored to a state under normal driving conditions until it reaches the requested output torque on the drive motor by the vehicle controller, which also indicates that the torque output reaches the driver requested torque. At this moment, the wheels have fully regained traction, the slippage of the vehicle has been effectively controlled, and the vehicle meets the condition for exiting slippage control. Correspondingly, the driving force of the vehicle may be restored to the maximum extent possible to avoid unnecessary power loss while ensuring safety and maintaining driving stability and comfort.

Furthermore, if the difference between the current left wheel speed and the current right wheel speed is greater than the first speed difference threshold, this indicates that during the reduction of the output torque of the drive motor, the speeds of the left and right wheels are not consistent. For example, when the left wheel is on a low-adhesion road surface while the right wheel is on a high-adhesion road surface, slippage of the vehicle may occur again. Therefore, at this moment, the target gradient is determined based on the current motor requested torque and the difference between the current right wheel speed and the left wheel speed according to the first gradient table. In this phase, the target gradient is Gradient 5. Thus, based on the target gradient, the output torque of the drive motor is restored to the third target intervention torque. In other words, when the third difference is less than or equal to 6 km/h and the difference between the current left wheel speed and the current right wheel speed is greater than 10 km/h, the output torque of the drive motor may be restored, based on the gradient 5, to the driver requested torque.

The third speed difference threshold may be acquired by looking up, based on the difference between the current left wheel speed and the current right wheel speed of the vehicle, a table. Different wheel speed differences may result in different values of third speed difference threshold. Meanwhile, since the target gradient is related to the motor requested torque and the difference between the current right wheel speed and the left wheel speed, the greater the difference between the current speed of the left wheel and the current speed of the right wheel is, the smaller the corresponding output target gradient may be. Meanwhile, the slower the torque of the driving motor increases, the greater the motor requested torque may be. Correspondingly, the greater the corresponding target gradient is, and the faster the torque of the driving motor may increase.

It should be noted that when the current left wheel speed and the current right wheel speed are under different working conditions, the difference is relatively large. Therefore, the difference between the current left wheel speed and the current right wheel speed under different working conditions is greater than that under the same working conditions.

Furthermore, when the third difference is greater than the third speed difference threshold, this indicates that during the reduction of the output torque of the drive motor, wheel slippage of the vehicle occurs again (as shown in S5 of FIG. 2: Wheel Speed e - f). At this moment, torque reduction needs to be continued. When the difference between the current left wheel speed and the current right wheel speed is less than or equal to the first speed difference threshold, that is, when the difference between the current left wheel speed and the current right wheel speed is less than or equal to 10 km/h, it indicates that the current left wheel speed and the current right wheel speed are under the same working conditions. In this case, the target gradient may be determined based on the third difference according to the third gradient table. In this phase, the target gradient is Gradient 6. Correspondingly, the output torque of the drive motor is reduced to the first target intervention torque based on the Gradient 6. In other words, when the third difference is greater than 6 km/h, and the difference between the current left wheel speed and the current right wheel speed is less than or equal to 10 km/h, the output torque of the drive motor is reduced to 0 Nm based on the Gradient 6. At the same time, it is necessary to optimize a calibration process to avoid the third difference exceeding the first slippage detection threshold as much as possible.

Furthermore, when the difference between the current left wheel speed and the current right wheel speed is greater than the first speed difference threshold, that is, when the difference between the current left wheel speed and the current right wheel speed is greater than 10 km/h, it indicates that the current left wheel speed and the current right wheel speed are under different working conditions. At this moment, the target gradient may be determined based on the third difference according to a fourth gradient table. In this phase, the target gradient is Gradient 7. Correspondingly, the output torque of the drive motor is rapidly reduced to the first target intervention torque based on Gradient 7. In other words, when the third difference is greater than 6 km/h, and the difference between the current left wheel speed and the current right wheel speed is greater than 10 km/h, the output torque of the drive motor is reduced to 0 Nm based on the Gradient 7. Since the target gradient is related to the third difference between the wheel speed after deceleration and the reference vehicle speed after deceleration, the larger the third difference between the wheel speed after deceleration and the reference vehicle speed after deceleration is, the greater the corresponding target gradient may be, and the faster the torque of the drive motor may be reduced.

It should be noted that, as shown in FIG. 2, during the torque restoring process in a stage S4 and the torque reduction process in a stage S5, an excess amount between the current wheel speed and the second slippage detection threshold may be reduced by calibration on the speed difference between the left and right wheels according to the embodiments of the present disclosure. During the torque restoring process in the S4 stage, when the current wheel speed is closer to a boundary of the second slippage detection threshold, the torque may increase more slowly, and even when the current wheel speed approaches the boundary of the second slippage detection threshold the torque may no longer increase. In addition, working conditions of the left and right wheel speeds of the vehicle are evaluated (e.g., the left wheel is on a low-adhesion surface while the right wheel is on a high-adhesion surface) and are separately calibrated. Specific implementation method is mentioned in the above embodiments. To avoid redundancy, no further detailed explanation is provided here.

Therefore, based on the detailed description of the above-mentioned embodiments, the present disclosure may achieve the following beneficial effects. Response time is shortened. In the present disclosure, slipping state monitoring and an intervention torque control algorithm are integrated within the drive motor. By eliminating CAN bus communication time between the ESC, the vehicle controller, and the motor controller, it significantly shortens the time from slippage detection to actual torque adjustment, thereby improving response speed. Slippage intervention may be performed in advance. Compared with the ESC, the intervention timing of the present disclosure is earlier, so that wheel torque intervention may be performed in advance, and excessive wheel slippage that causes power loss may be prevented at the same time, thereby maintaining the power output at the wheel end. Torque output may be adjusted dynamically. To address slippage on low-adhesion surfaces, the target intervention torque may be dynamically adjusted, based on the real-time monitoring of wheel speed and vehicle speed changes, to ensure the best performance of the vehicle under different adhesion conditions, thereby reducing a tire burnout, increasing a lifespan of the tires, and ensuring the driving safety of the vehicle.

In view of above, according to the vehicle slippage control method of the embodiments of the present disclosure, the first torque reduction gradient is determined based on the first difference between the current wheel speed and the current reference vehicle speed, and the output torque of the drive motor is reduced to the first target intervention torque based on the first torque reduction gradient. Meanwhile, when the current wheel speed has a downward trend, the target gradient is determined based on the current motor requested torque, the wheel speed after deceleration and the reference vehicle speed after deceleration and the output torque of the drive motor is adjusted based on the target gradient until the vehicle meets the condition for exiting slippage control. The method integrates a control algorithm into a motor control unit to monitor wheel slippage status in real time and may perform torque intervention in advance, thereby dynamically adjusting the output torque of the drive motor to reduce an occurrence of wheel slippage again and ensuring a stable output of vehicle driving force.

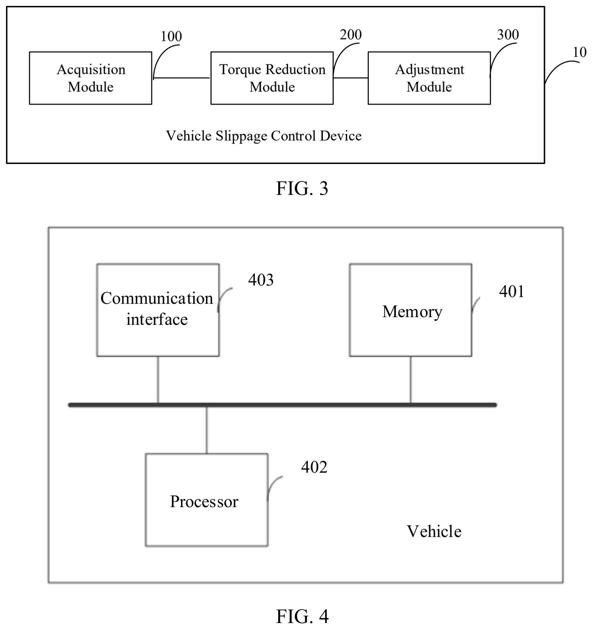

FIG. 3 is a schematic structural diagram of a vehicle slippage control device according to the embodiments of the present disclosure.

Exemplarily, as shown in FIG. 3, the device 10 may include: an acquisition module 100, a torque reduction module 200, and an adjustment module 300.

The acquisition module 100 is configured to acquire a current wheel speed and a current reference vehicle speed of a vehicle.

The torque reduction module 200 is configured to determine, based on a first difference between the current wheel speed and the current reference vehicle speed, a first torque reduction gradient when slippage is determined to occur based on the current wheel speed and the current reference vehicle speed, reduce, based on the first torque reduction gradient, an output torque of a drive motor to a first target intervention torque, and determine whether the current wheel speed has a downward trend.

The adjustment module 300 is configured to determine, based on a current motor requested torque, a wheel speed after deceleration and a reference vehicle speed after deceleration, a target gradient when the current wheel speed has the downward trend, and adjust, based on the target gradient, the output torque of the drive motor until the vehicle meets a condition for exiting slippage control.

Optionally, in one embodiment of the present disclosure, after acquiring the current wheel speed and the current reference speed of the vehicle, the acquisition module 100 further includes:
a first judgment unit, configured to determine whether the first difference between the current wheel speed and the current reference vehicle speed is greater than a first speed difference threshold; and
a determination unit, configured to determine occurrence of slippage when the first difference between the current wheel speed and the current reference vehicle speed is greater than the first speed difference threshold.

Optionally, in one embodiment of the present disclosure, the first speed difference threshold is acquired by looking up, based on a difference between a current left wheel speed and a current right wheel speed of the vehicle, a table.

Optionally, in one embodiment of the present disclosure, the adjustment module 300 further includes:
a second judgment unit, configured to determine whether a second difference between the wheel speed after deceleration and the reference vehicle speed after deceleration is greater than a second speed difference threshold;
a torque reduction unit, configured to determine, based on the second difference, the target gradient, and reduce, based on the target gradient, the output torque of the drive motor to the first target intervention torque when the second difference between the wheel speed after deceleration and the reference vehicle speed after deceleration is greater than the second speed difference threshold.

Optionally, in one embodiment of the present disclosure, after determining whether the second difference between the wheel speed after deceleration and the reference vehicle speed after deceleration is greater than the second speed difference threshold, the second judgment unit further includes:
a torque increasing sub-unit, configured to determine, based on the current motor requested torque, the target gradient, and restore, based on the target gradient, the output torque of the drive motor to a second target intervention torque when the the second difference between the wheel speed after deceleration and the reference vehicle speed after deceleration is less than or equal to the second speed difference threshold.

Optionally, in one embodiment of the present disclosure, after the restoring, based on the target gradient, the output torque of the drive motor to a second target intervention torque, the torque increasing sub-unit further includes:
a calculation member, configured to calculate a third difference between the wheel speed after deceleration and the reference vehicle speed after deceleration;
a first judgment member, configured to determine whether the third difference between the wheel speed after deceleration and the reference vehicle speed after deceleration is less than or equal to a third speed difference threshold; and
a second judgment member, configured to acquire a current left wheel speed and a current right wheel speed of the vehicle when the third difference is less than or equal to the third speed difference threshold, and determine whether a difference between the current left wheel speed and the current right wheel speed is less than or equal to the first speed difference threshold;
a determination member, configured to determine, based on the current motor requested torque and the difference between the current left wheel speed and the current right wheel speed, the target gradient according to a first gradient table when the difference between the current left wheel speed and the current right wheel speed is less than or equal to the first speed difference threshold, or determine, based on the current motor requested torque and the difference between the current left wheel speed and the current right wheel speed, the target gradient according to a second gradient table when the difference between the current left wheel speed and the current right wheel speed is greater than the first speed difference threshold;
a torque increasing member, configured to restore, based on the target gradient, the output torque of the drive motor to a third target intervention torque.

Optionally, in one embodiment of the present disclosure, after the step of determining whether the third difference between the wheel speed after deceleration and the reference vehicle speed after deceleration is less than or equal to the third speed difference threshold, the first judgment member further includes:
a judgment sub-member, configured to determine whether the difference between the current left wheel speed and the current right wheel speed is less than or equal to the first speed difference threshold when the third difference is greater than the third speed difference threshold;
a determination sub-member, configured to determine, based on the third difference, the target gradient according to a third gradient table when the difference between the current left wheel speed and the current right wheel speed is less than or equal to the first speed difference threshold; or determine, based on the third difference, the target gradient according to a fourth gradient table when the difference between the current left wheel speed and the current right wheel speed is greater than the first speed difference threshold; and
a torque reduction sub-member, configured to reduce, based on the target gradient, the output torque of the drive motor to the first target intervention torque.

To sum up, according to the vehicle slippage control device of the embodiments of the present disclosure, the first torque reduction gradient is determined based on the first difference between the current wheel speed and the current reference vehicle speed, and the output torque of the drive motor is reduced to the first target intervention torque based on the first torque reduction gradient. Meanwhile, when the current wheel speed has a downward trend, the target gradient is determined based on the current motor requested torque, the wheel speed after deceleration and the reference vehicle speed after deceleration and the output torque of the drive motor is adjusted based on the target gradient until the vehicle meets the condition for exiting slippage control. The method integrates a control algorithm into a motor control unit to monitor wheel slippage status in real time and may perform torque intervention in advance, thereby dynamically adjusting the output torque of the drive motor to reduce an occurrence of wheel slippage again and ensuring a stable output of vehicle driving force.

FIG. 4 is a schematic structural diagram of a vehicle according to the embodiments of the present disclosure.

It is understandable that the above-mentioned method may be applied to the vehicle shown in FIG. 4.

Furthermore, the embodiments of the present disclosure further disclose a device including a memory and a processor. Executable program codes are stored in the memory. The processor is configured to call and execute the executable program codes to execute the vehicle slippage control method provided by the embodiments of the present disclosure.

Furthermore, the device further includes: a communication interface 403, configured to communicate between the memory 401 and the processor 402.

The device may be divided into functional modules of the device in this embodiment according to the above method examples. For example, each functional module may corresponds to steps of the vehicle slippage control method, or two or more functions may be integrated into a single processing module. The integrated module may be implemented in a form of hardware. It should be noted that the division of the modules in the embodiment is illustrative and merely represents a logical function division. In actual implementation, there may be alternative division methods.

It should be noted that all relevant contents of each step involved in the above-mentioned method embodiments may be referred to in the functional description of the corresponding functional modules. No further detailed explanation is provided here.

It is understandable that the device provided in the embodiment is configured to execute the above-mentioned vehicle slippage control method, and thus may achieve the same effect as the above-mentioned method.

In a case where an integrated unit is adopted, the device may include a processing module and a storage module. When the device is applied to vehicles, the processing module may be configured to control and manage action of the vehicle. The storage module may be configured to support vehicles in executing relevant program codes, etc.

The processing module may be the processor 402 or a controller, and may implement or execute various exemplary logical blocks, modules, and circuits described in the content disclosed in the present disclosure. The processor 402 may also be a combination that implements computing functions, such as a combination of one or more microprocessors, a combination of Digital Signal Processing (DSP) and microprocessors, etc. The storage module may be memory 401.

Additionally, the device provided by the embodiments of the present disclosure may specifically be a chip, a component, or a module. The chip may include the processor 402 and the memory 401 in communication with each other. The memory 401 is configured to store instructions. When the processor calls and executes the instructions, the chip is configured to execute the vehicle slippage control method provided in the above embodiments.

The embodiment further provides a computer-readable storage medium storing computer program codes. When the computer program code are executed on a computer, the computer is configured to execute steps of the above-mentioned method to achieve the vehicle slippage control method provided by the above embodiment.

The embodiment further provides a computer program product, when the computer program product is executed on a computer, the computer is configured to execute the above-mentioned related steps to achieve the vehicle slippage control method provided by the above embodiments.

The device, the computer-readable storage medium, the computer program product, or the chip provided by the embodiments are all configured to execute the above-mentioned method. Therefore, the beneficial effects achieved by them may refer to the beneficial effects in the corresponding method provided above. No further detailed explanation is provided here.

Through the description of the above embodiments, those skilled in the art may understand that, for convenience and clarity of description, only the division of the above-mentioned functional modules is used as an example. In practical applications, the above functions may be allocated to different functional modules as needed, meaning the internal structure of the device may be divided into different functional modules to accomplish all or part of the functions described above.

In the embodiments provided in the present disclosure, it is understandable that the disclosed device and method may be implemented in other methods. For example, the device embodiments described above are merely illustrative. For example, the division of modules or units is only a logical functional division. In practical implementation, alternative division methods may be adopted. For example, the plurality of units or components may be combined or integrated into another device, or some features may be omitted or not executed. Furthermore, the displayed or discussed mutual couplings, direct couplings, or communication connections may be implemented through certain interfaces, devices, or units in the form of indirect couplings or communication connections, and may be electrical, mechanical, or of other forms.

The above contents are merely specific embodiments of the present disclosure, rather than limiting the protection scope of the present invention. Any changes or substitutions that can be easily conceived by those skilled in the art within the scope of the technology disclosed in this disclosure should be covered by the scope of protection of the present disclosure. Therefore, the scope of protection of the present disclosure should be determined by the protection scope of the claims.

## Claims

1. A vehicle slippage control method, comprising:
acquiring (S101) a current wheel speed and a current reference vehicle speed of a vehicle;
determining (S102), based on a first difference between the current wheel speed and the current reference vehicle speed, a first torque reduction gradient when slippage is determined to occur based on the current wheel speed and the current reference vehicle speed, reducing, based on the first torque reduction gradient, an output torque of a drive motor to a first target intervention torque, and determining whether the current wheel speed has a downward trend; and
determining (S103), based on a current motor requested torque, a wheel speed after deceleration and a reference vehicle speed after deceleration, a target gradient when the current wheel speed has the downward trend, and adjusting, based on the target gradient, the output torque of the drive motor until the vehicle meets a condition for exiting slippage control.

2. The method according to claim 1, after the acquiring (S101) the current wheel speed and the current reference speed of the vehicle, further comprising:
determining whether the first difference between the current wheel speed and the current reference vehicle speed is greater than a first speed difference threshold; and
determining occurrence of slippage when the first difference between the current wheel speed and the current reference vehicle speed is greater than the first speed difference threshold.

3. The method according to claim 2, wherein the first speed difference threshold is acquired by looking up, based on a difference between a current left wheel speed and a current right wheel speed of the vehicle, a table.

4. The method according to claim 1, wherein the determining (S103), based on the current motor requested torque, the wheel speed after deceleration and the reference vehicle speed after deceleration, the target gradient, and adjusting, based on the target gradient, the output torque of the drive motor, comprises:
determining whether a second difference between the wheel speed after deceleration and the reference vehicle speed after deceleration is greater than a second speed difference threshold; and
determining, based on the second difference, the target gradient, and reducing, based on the target gradient, the output torque of the drive motor to the first target intervention torque when the second difference between the wheel speed after deceleration and the reference vehicle speed after deceleration is greater than the second speed difference threshold.

5. The method according to claim 4, after the determining whether the second difference between the wheel speed after deceleration and the reference vehicle speed after deceleration is greater than the second speed difference threshold, further comprising:
determining, based on the current motor requested torque, the target gradient, and restoring, based on the target gradient, the output torque of the drive motor to a second target intervention torque when the the second difference between the wheel speed after deceleration and the reference vehicle speed after deceleration is less than or equal to the second speed difference threshold.

6. The method according to claim 5, wherein after the restoring, based on the target gradient, the output torque of the drive motor to the second target intervention torque, further comprises:
calculating a third difference between the wheel speed after deceleration and the reference vehicle speed after deceleration;
determining whether the third difference between the wheel speed after deceleration and the reference vehicle speed after deceleration is less than or equal to a third speed difference threshold;
acquiring a current left wheel speed and a current right wheel speed of the vehicle when the third difference is less than or equal to the third speed difference threshold, and determining whether a difference between the current left wheel speed and the current right wheel speed is less than or equal to the first speed difference threshold;
determining, based on the current motor requested torque and the difference between the current left wheel speed and the current right wheel speed, the target gradient according to a first gradient table when the difference between the current left wheel speed and the current right wheel speed is less than or equal to the first speed difference threshold, or determining, based on the current motor requested torque and the difference between the current left wheel speed and the current right wheel speed, the target gradient according to the second gradient table when the difference between the current left wheel speed and the current right wheel speed is greater than the first speed difference threshold; and
restoring, based on the target gradient, the output torque of the drive motor to a third target intervention torque.

7. The method according to claim 6, after the determining whether the third difference between the wheel speed after deceleration and the reference vehicle speed after deceleration is less than or equal to the third speed difference threshold, further comprising:
determining whether the difference between the current left wheel speed and the current right wheel speed is less than or equal to the first speed difference threshold when the third difference is greater than the third speed difference threshold;
determining, based on the third difference, the target gradient according to a third gradient table when the difference between the current left wheel speed and the current right wheel speed is less than or equal to the first speed difference threshold; or determining, based on the third difference, the target gradient according to a fourth gradient table when the difference between the current left wheel speed and the current right wheel speed is greater than the first speed difference threshold; and
reducing, based on the target gradient, the output torque of the drive motor to the first target intervention torque.

8. The method according to claim 1, wherein the current wheel speed is a single axle wheel speed of the vehicle, and the current reference vehicle speed is an actual traveling speed of the vehicle.

9. A vehicle, comprising: a memory (401) and a processor (402), wherein executable program codes are stored in the memory (401) and the processor (402) is configured to call and execute the executable program codes to execute a vehicle slippage control method according to any one of claims 1 to 8.

10. A computer-readable storage medium, wherein the computer-readable storage medium stores a computer program, and the computer program is configured to be executed to implement a vehicle slippage control method according to any one of claims 1 to 8.
